# EUROPÄISCHE PATENTSCHRIFT

(11) **EP 2 545 789 B1**
(45) Veröffentlichungstag und Bekanntmachung des Hinweises auf die Patenterteilung: **06.04.2016**
(21) Anmeldenummer: 12176386.6
(22) Anmeldetag: 13.07.2012
(51) Int. Cl.: A23L 33/17, A23J 3/04, A23J 3/08, A23J 3/10, A23J 3/14

(54) **PROTEINHALTIGE NAHRUNGSMITTELZUSAMMENSETZUNG**
NUTRITIONAL COMPOUND CONTAINING PROTEIN
COMPOSITION DE PRODUITS ALIMENTAIRES CONTENANT DES PROTÉINES

(30) Priorität: 15.07.2011 DE 102011079288
(43) Veröffentlichungstag der Anmeldung: 16.01.2013
(73) Patentinhaber: Deutsches Institut für Lebensmitteltechnik e.V., 49610 Quakenbrück (DE)
(72) Erfinder: Kroll, Stefan, 49610 Quakenbrück (DE); Hillmann, Jürgen, 49610 Quakenbrück (DE); Söhnel, Ernst, 49610 Quakenbrück (DE); Knoch, Achim, 49610 Quakenbrück (DE)
(74) Vertreter: Taruttis, Stefan Georg

(56) Entgegenhaltungen:
- EP-A2- 2 255 663
- US-A1- 2006 088 628
- US-A1- 2007 014 914
- US-A1- 2007 042 104
- US-A1- 2007 148 289

## Beschreibung

Die vorliegende Erfindung betrifft eine Nahrungsmittelzusammensetzung mit hohem Proteingehalt, insbesondere zumindest 50%, vorzugsweise zumindest 60%, besonders bevorzugt 65% oder mehr Proteingehalt an der Nahrungsmittelzusammensetzung, sowie ein Verfahren zur Herstellung dieser Nahrungsmittelzusammensetzung. Die erfindungsgemäße Nahrungsmittelzusammensetzung ist vorzugsweise fest, auch nach einer Lagerung bei Raumtemperatur für mindestens 30 Tage, besonders bevorzugt mit weichem Biss bzw. schnittfest. Die Nahrungsmittelzusammensetzung zeichnet sich vorzugsweise dadurch aus, dass sie eine Dichte von zumindest 0,6, bevorzugt zumindest 0,7, z.B. bis 0,9 oder bis 0,8 (kg/L) aufweist, und insbesondere massiv bzw. nicht porös ist. Optional ist die Nahrungsmittelzusammensetzung glutenfrei. Bevorzugt ist die Nahrungsmittelzusammensetzung hergestellt durch ein Verfahren, dass aus dem Mischen ihrer Bestandteile und Formen, z.B. durch Pressen und Schneiden bzw. Portionieren besteht, insbesondere bei Temperaturen unterhalb 95°C, bei maximal 30°C, bevorzugt bei maximal 20°C oder maximal 10°C.

Das Verfahren zur Herstellung der Nahrungsmittelzusammensetzung besteht vorzugsweise aus einer Abfolge von Schritten zum Zumischen der Bestandteile der Nahrungsmittelzusammensetzung, d.h. insbesondere ohne das Entfernen von Wasser aus der Nahrungsmittelzusammensetzung, da die proteinhaltigen Bestandteile in Pulverform durch Mischen mit den flüssigen Bestandteilen, die zumindest aus Öl bestehen, zu einer Masse umgesetzt werden. Entsprechend kann die Herstellung der Nahrungsmittelzusammensetzung ohne eine Erwärmung erfolgen, vorzugsweise ausschließlich bei 5 bis 30 °C, bevorzugt bei 10 bis 20 °C.

### Stand der Technik

Die DE 102009019551 A1 beschreibt eine Emulsion, die bis 10 Gew.-% Protein und mindestens 40 Gew.-% Wasser enthalt.

Die WO 95/14396 beschreibt extrudierte Frittierprodukte, die aus einem Teig mit bis zu 25 Gew.-% der Trockenmasse zum Beispiel Sojabohnenproteinisolat enthalten.

Die US 2003/0113434 A1 beschreibt aus einer wässrigen Masse gebackene Waffeln, die 67 oder 78 % Protein aufweisen können.

Die US 2006/0182872 A1 beschreibt einen proteinhaltigen Riegel aus 10g hydrolysiertem Rinderprotein, z.B. Knochengelatine, 7g Ca-Caseinat, 3,6g Molkeproteinisolat und 2g Sojaproteinisolat, 11,5g Glycerin, 2.5g Wasser, 0,03g Sucralose, 0,09g Vitaminmix, 2.5g Maltitol, 4-6g Aroma mit 6g Hülle und 0,002g Sorbat.

Die US 2007/0148289 A1 beschreibt zuckerreduzierte Riegel, deren Füllung oder Cremeschicht sich durch eine mesomorphe Phase auszeichnet, die durch Tenside erzeugt wird. Die Füllung soll 10 bis 50% des Riegels ausmachen. Als Verdickungsmittel für die Füllung oder Creme können Pektin, Stärke, Carrageen oder Protein eingesetzt werden. Als weiterer Bestandteil kann die Füllung oder Creme ein Feuchthaltemittel aufweisen, z.B. bis 75 Gew.-% Glycerin oder Zucker oder Zuckeralkohol.

Die EP 2 255 663 A2 beschreibt Backwaren, die nach den Beispielen keinen Proteingehalt von 50% enthalten.

Die US 2007/0042104 A1 beschreibt ein Verfahren zur Erzeugung einer Mischung aus isoliertem Sojaprotein und Milchproteinen.

### Aufgabe der Erfindung

Der Erfindung stellt sich die Aufgabe, eine Nahrungsmittelzusammensetzung mit hohem Proteingehalt bereitzustellen, die ernährungsphysiologisch hochwertig ist und auch nach längerer Lagerdauer eine für den menschlichen Verzehr geeignete feste Konsistenz aufweist, und die besonders bevorzugt ein weiches Mundgefühl und zarten Biss aufweist.

### Allgemeine Beschreibung der Erfindung

Die Erfindung löst die Aufgabe mit den Merkmalen der Ansprüche, insbesondere mit einem Verfahren zur Herstellung einer Nahrungsmittelzusammensetzung, die einen Proteingehalt von zumindest 50 Gew.-% , bevorzugt zumindest 55 Gew.-%, bevorzugter mindestens 60 Gew.-%, bevorzugter 65 Gew.-%, besonders bevorzugt 67 Gew.-% an der Gesamtmasse aufweist, wobei die Nahrungsmittelzusammensetzung bevorzugt eine Dichte von zumindest 0,6, bevorzugt zumindest 0,7 kg/L hat und insbesondere keine Gaseinschlüsse hat, z.B. nicht porös ist. Die Nahrungsmittelzusammensetzung ist durch Mischen und Formen der erhaltenen Mischung, z.B. durch Pressen und Schneiden erhältlich, ohne zusätzliche Erwärmung. Entsprechend ist die Nahrungsmittelzusammensetzung nicht erwärmt, insbesondere nicht gegart bzw. nicht auf die Siedetemperatur von Wasser erwärmt worden. Die Nahrungsmittelzusammensetzung besteht vorzugsweise aus der durch Mischen und Formen ihrer Bestandteile erhältlichen Masse.

Die Nahrungsmittelzusammensetzung kann insbesondere einen Proteingehalt von 67% von der Gesamtmasse aufweisen und eine für einen Proteinriegel gewünschte feste Struktur aufweisen, die auch nach Lagerung bei Raumtemperatur für 30 Tage, vorzugsweise für 60 Tage, besonders bevorzugt für zumindest 90 bis zumindest 100 Tage fest ist und in bevorzugter Ausführungsform auch nach der Lagerung ein weiches Mundgefühl und einen zarten Biss aufweist. Das weiche Mundgefühl bzw. der zarte Biss können auch als Schnittkraft im Bereich von 10 bis 22 N, insbesondere von 15 bis 20, besonders bevorzugt von 15 bis 17 N bestimmt sein. Bevorzugt weist die Nahrungsmittelzusammensetzung nach einer Lagerung von 200, bevorzugt von 300 Tagen bei Raumtemperatur in feuchtigkeitsdichter Verpackung eine bissfeste Konsistenz und eine Schnittkraft von maximal 25N, bevorzugt von maximal 21N auf. Generell wird die Schnittkraft mit einer Schnittbreite von 20mm einer als Messkörper eingesetzten Klinge (Dicke <0,2 mm, Rasierklinge), bei 20°C mit einer Vorschubgeschwindigkeit von 2,0mm/s bestimmt, wobei die Proben auf eine Dicke von 13 bis 17mm durch Auswalzen der Mischung der Inhaltsstoffe der Nahrungsmittelzusammensetzung gepresst sind. Als Messgerät wird bevorzugt ein Texture Analyzer TA-XT2, erhältlich von Dimension Stable Micro Systems Ltd. eingesetzt.

Wegen des Gehalts an ernährungsphysiologisch wertvollem Protein und der generell bevorzugten Abwesenheit zugesetzter Konservierungsstoffe stellt die erfindungsgemäße Nahrungsmittelzusammensetzung ein hochwertiges Nahrungsmittel dar.
Weiterhin zeichnet sich die erfindungsgemäße Nahrungsmittelzusammensetzung durch einen niedrigen a_{w} - Wert, vorzugsweise im Bereich < 0,6 aus. Aufgrund der Zusammensetzung aus Proteinpulvern, die eine nachstehend angegebene Zusammensetzung aufweisen, bzw. daraus bestehen, führt die Herstellung durch Mischen der Bestandteile zu einem ausreichend niedrigen Gesamtkeimgehalt, der in Verbindung mit dem niedrigen a_{w}-Wert eine Haltbarkeit über zumindest 30 Tage, vorzugsweise über zumindest 60, besonders bevorzugt über zumindest 90 Tage erlaubt, ohne dass ein Haltbarkeitsmittel in der Zusammensetzung enthalten ist, wobei vorzugsweise die Lebensmittelzusammensetzung in herkömmlicher Weise bei der Lebensmittelherstellung steril verpackt ist. Entsprechend kann das Verfahren zur Herstellung auch aus den Schritten des Mischens und Ausformens, optional des Überziehens der Nahrungsmittelzusammensetzung mit Süßwarenmasse bestehen, z.B. keine Erwärmung wie beispielsweise die Pasteurisation oder eine Erhitzung auf eine höhere Temperatur, noch eine Sterilisierung mittels Bestrahlung aufweisen. Als Überzug sind insbesondere fetthaltige Süßwarenmassen geeignet, z.B. Schokolade.

Die erfindungsgemäße Nahrungsmittelzusammensetzung weist insbesondere die folgenden Bestandteile auf oder besteht aus:
3 bis 20 Gew.-%, bevorzugt 5 bis 15 Gew.-%, insbesondere 5 bis 7 Gew.-% Wasser, optional 0,1 bis 0,3 Gew.-%, insbesondere 0,2 Gew.-% Süßstoff, z.B. ein Peptidsüßstoff, insbesondere Aspartam,
optional 3 bis 20 Gew.-%, insbesondere 3 bis10, bevorzugt 4 bis 8 Gew.-% eines tierischen Proteins, z.B. Eiklarpulver, Fleischpulver,
3 bis 20 Gew.-%, bevorzugt 3 bis 10 Gew.-%, insbesondere 5 bis 8 Gew.-% zumindest eines pflanzlichen Proteinisolats, insbesondere aus der Gruppe, die Erbsenproteininsolat, Kartoffelproteinisolat, Gluten und/oder Sojaproteinisolat umfasst,
3 bis 20 Gew.-%, bevorzugt 3 bis 10 Gew.-%, insbesondere 5 bis 6 Gew.-% Molkeprotein, vorzugsweise aus Kuhmilch, bevorzugt gelierend oder hochgelierend,
5 bis 30 Gew.-%, insbesondere 10 bis 25 Gew.-%, besonders bevorzugt 15 bis 20 Gew.-% Molkeproteinhydrolysat, vorzugsweise aus Kuhmilchmolke,
2 bis 17 Gew.-%, bevorzugt 5 bis 17 Gew.-%, insbesondere 10 bis 15 Gew.-% eines ersten tierischen Proteinhydrolysats,
5 bis 20 Gew.-%, bevorzugt 5 bis 15 Gew.-%, insbesondere 8 bis 10 Gew.-% eines zweiten tierischen Proteinhydrolysats,
optional 20 bis 35 Gew.-%, insbesondere 22 bis 33 Gew.-% Casein und/oder Caseinat, optional 0,1 bis 2 Gew.-%, insbesondere 0,5 bis 1 Gew.-% Aroma,
5 bis 15 Gew.-%, insbesondere 8 bis 13 Gew.-% zumindest eines Feuchthaltemittels, z.B. eines Polyols, vorzugsweise Glycerin und/oder eines Zuckeralkohols, beispielsweise Sorbitol, 1 bis 10 Gew.-%, insbesondere 4 bis 10 Gew.-%, und/oder bevorzugt ca. 4 Gew.-% zumindest eines eßbaren, bei Raumtemperatur flüssigen pflanzlichen oder tierischen gesättigten, einfach oder mehrfach ungesättigten Öls, insbesondere Sonnenblumenöl, Rapsöl, Erdnussöl, Olivenöl, Distelöl und/oder Lachsöl.

Bevorzugt weist die Nahrungsmittelzusammensetzung einen Überzug auf, z.B. aus Süßwarenmasse auf, beispielsweise aus Schokolade, vorzugsweise Vollmilch- oder Bitterschokolade, oder einen zweiseitigen oder umfänglichen Überzug aus Mehl-Wasser-Teig, insbesondere gebacken oder frittiert.

Die Bestandteile der Nahrungsmittelzusammensetzung weisen vorzugsweise eine Molekulargewichtsverteilung auf, die in der nachfolgenden Tabelle 1 dargestellt ist.

**Tabelle 1: Bevorzugte Molekulargewichte der Bestandteile**

| | MW |
|---|---|
| tierisches Protein, bevorzugter Proteingehalt ca. 80 Gew.-%, insbesondere Fleischpulver und/oder Eiklarpulver | |
| Eiklarhydrolysatpulver, bevorzugter Proteingehalt ca. 80 Gew.-%, z.B. als tierisches Protein | >50kDa zu 1-11 Gew.-%, bevorzugt 3-9 Gew.-%, insbesondere 6 Gew.-%, 50-5kDa zu 1-11 Gew.-%, bevorzugt 3-9 Gew.-%, insbesondere 6 Gew.-%, 5-0,6kDa zu 46-66 Gew.-%, bevorzugt 51-61 Gew.-%, insbesondere 56 Gew.-%, dimere Aminosäuren (AS) zu 0-6 Gew.-%, insbesondere 3 Gew.-%, monomere AS zu 18-38 Gew.-%, bevorzugt 23-33 Gew.-%, insbesondere 28 Gew.-%, |
| pflanzliches Proteinisolat, bevorzugter Proteingehalt ca. 80 - 85 Gew.-%, insbesondere ca. 83 - 84 Gew.-% , z.B. Erbsenproteinisolat | |
| Molkeprotein, bevorzugter Proteingehalt ca. 80 Gew.-% | |
| Molkeproteinhydrolysat, bevorzugter Proteingehalt ca. 85 - 90 Gew.-%, insbesondere ca. 88 Gew.-% | generell zu >90% hydrolysiert, z.B. >5kDa zu 1-7 Gew.-% MW, insbesondere 4 Gew.-%, 5-0,6kDa zu 68-88 Gew.-%, bevorzugt zu 75-81 Gew.-%, insbesondere 78 Gew.-%, dimere AS zu >1 Gew.-%, bevorzugt 2-10%, insbesondere 2 Gew.-%, monomere AS zu 10-20 Gew.-%, insbesondere zu 15 Gew.-% |
| erstes tierisches Proteinhydrolysat, bevorzugter Proteingehalt ca. 80 - 85 Gew.-%, insbesondere ca. 82 - 84 Gew.-%, z.B. vom Schwein, Rind und/oder Geflügel | >100 kDa zu 32-52 Gew.-%, bevorzugt 40-45 Gew.-%, insbesondere 42 Gew.-%, 100-30kDa zu 13-33 Gew.-%, bevorzugt 20-25 Gew.-%, insbesondere 23 Gew.-%, 30-20kDa zu 5-10 Gew.-%, insbesondere 8 Gew.-%, 20-5kDa zu 6-12 Gew.-%, insbesondere 9 Gew.-%, 5-0,6kDa zu 0-6 Gew.-%, insbesondere 3 Gew.-%, dimere AS zu 3-9 Gew.-%, insbesondere 6 Gew.-%, monomere AS zu 5-11 Gew.-%, insbesondere 8 Gew.-%, |
| zweites tierisches Proteinhydrolysat, bevorzugter Proteingehalt ca. 85 - 95 Gew.-%, insbesondere ca. 87 - 93 Gew.-%, z.B. vom Schwein, Rind und/oder Geflügel | >10kDa zu 2 - 8 Gew.-%, insbesondere 5 Gew.-%, 10-5kDa zu 35-55 Gew.-%, bevorzugt 42-48 Gew.-%, insbesondere 45 Gew.-%, 5-3kDa zu 30-50 Gew.-%, bevorzugt 37-43 Gew.-%, insbesondere 40 Gew.-%, 3-0,6kDa zu 5-11 Gew.-%, bevorzugt 8 Gew.-%, dimere AS zu <2 Gew.-%, insbesondere <1 Gew.-%, monomere AS zu <2 Gew.-%, insbesondere <1 Gew.-% |
| Casein, bevorzugter Proteingehalt ca. 85 - 95 Gew.-%, insbesondere ca. 87 - 93 Gew.-% | |

Es hat sich gezeigt, dass eine besonders vorteilhafte Nahrungsmittelzusammensetzung erhältlich ist, wenn die proteinhaltigen Bestandteile als Pulver eingesetzt werden und insbesondere die Partikelgrößen aufweisen, die in der nachfolgenden Tabelle 2 angegeben sind.

**Tabelle 2: Bevorzugte Partikelgrößen der pulverförmigen eingesetzten Bestandteile**

| | Partikelgröße |
|---|---|
| tierisches Protein, z.B. Eiklarpulver und/oder Eiklarhydrolysatpulver | 70-90% Gew.-%, bevorzugt 75-85 Gew.-%, insbesondere 80 Gew.-%, mit einer Größe im Bereich 3-88µm, bevorzugt 8-80µm, z.B. mit einer mittleren Partikelgröße von 28-48µm, bevorzugt von ca. 33-42µm, insbesondere ca. 38-40µm |
| pflanzliches Proteinisolat, z.B. Erbsenproteinisolat | 70-90% Gew.-%, bevorzugt 75-85 Gew.-%, insbesondere 80 Gew.-%, mit einer Größe im Bereich 2,5-70µm, bevorzugt 7-65µm oder bis 60µm, z.B. mit einer mittleren Partikelgröße von 20-40µm, bevorzugt von ca. 25-35µm, insbesondere ca. 30µm |
| Molkeprotein | 70-90% Gew.-%, bevorzugt 75-85 Gew.-%, insbesondere 80 Gew.-%, mit einer Größe im Bereich 1-250µm, bevorzugt 5-200µm, z.B. mit einer mittleren Partikelgröße von 200-24µm, bevorzugt von ca. 212-232µm, insbesondere ca. 220-225µm |
| Molkepröteinhydrolysat | 70-90% Gew.-%, bevorzugt 75-85 Gew.-%, insbesondere 80 Gew.-%, mit einer Größe im Bereich 5-283µm, bevorzugt 10-278µm, z.B. mit einer mittleren Partikelgröße von 125-145µm, bevorzugt von ca. 230-140µm, insbesondere ca. 134-136µm |
| erstes tierisches Proteinhydrolysat | 70-90% Gew.-%, bevorzugt 75-85 Gew.-%, insbesondere 80 Gew.-%, mit einer Größe im Bereich 1-250µm, bevorzugt 5-200µm, z.B. mit einer mittleren Partikelgröße von 200-240µm, bevorzugt von ca. 212-232µm, insbesondere ca. 220-225µm |
| zweites tierisches Proteinhydro lysat | 70-90% Gew.-%, bevorzugt 75-85 Gew.-%, insbesondere 80 Gew.-%, mit einer Größe im Bereich 60-450µm, bevorzugt 65-415µm, z.B. mit einer mittleren Partikelgröße von 52-72µm, bevorzugt von ca. 57-67µm, insbesondere ca. 62µm |
| Casein und/oder Caseinat | 70-90% Gew.-%, bevorzugt 75-85 Gew.-%, insbesondere 80 Gew.-%, mit einer Größe im Bereich 40-230µm, bevorzugt 45-220µm, z.B. mit einer mittleren Partikelgröße von 120-140µm, bevorzugt von ca. 125-135µm, insbesondere ca. 128-131µm |

Das Herstellungsverfahren kann die folgenden Schritte aufweisen oder daraus bestehen:
- Mischen der pulverförmigen Bestandteile, insbesondere des pulverförmigen tierischen Proteins, des pulverförmigen pflanzlichen Proteinisolats, des pulverförmigen Molkeproteins, des pulverförmigen Molkeproteinhydrolysats, des pulverförmigen ersten tierischen Proteinhydrolysats, des pulverförmigen zweiten tierischen Proteinhydrolysats und optional des pulverförmigen Caseins und/oder Caseinats,
- Mischen des fettlöslichen Aromas in das Öl,
- Lösen des wasserlöslichen Aromas in Wasser,
- Zugabe des Öls mit fettlöslichem Aroma und des Wassers mit wasserlöslichem Aroma zu den gemischten pulverförmigen Bestandteilen, wahlweise jeweils separat, gleichzeitig, oder optional mit dem Schritt des Dispergierens des Öls mit dem fettlöslichen Aroma mit dem Wasser mit dem wasserlöslichen Aroma und Zugabe der Emulsion zu den gemischten pulverförmigen Bestandteilen,
- Mischen der Bestandteile der Nahrungsmittelzusammensetzung, insbesondere schonend, bevorzugt mit geringem Eintrag von Scherkräften, optional unter Kühlung, insbesondere mit einem satzweise arbeitenden Mischer,
- optional mit dem Schritt des Zerkleinerns von Agglomeraten, beispielsweise mittels eines Messerschneiders,
- Ausformen der Nahrungsmittelzusammensetzung, beispielsweise durch Auswalzen und/oder Strangformen, insbesondere zu einer Dichte von 0,6 bis 0,85kg/L, bevorzugt einer Dichte von 0,7 bis 0,8kg/L, mit dem anschließenden Schritt des Schneidens und/oder Prägens, beispielsweise mit einer umlaufenden Prägekette und/oder einer Rotationsprägemaschine, optional mit anschließendem Überziehen, z.B. mit Süsswarenmasse, beispielsweise mit Schokolade, mit Wasser-Mehl-Teig, z.B. Brezelteig, Bierteig, Wasser-Stärke-Protein-Suspension, bevorzugt mit dem Schritt des Erwärmens, z.B. durch kurzzeitiges Backen oder Frittieren. Alternativ kann die Nahrungsmittelzusammensetzung in oder auf einen fertig gebackenen bzw. frittierten Teigling aufgebracht werden oder zwischen zwei fertig gebackenen bzw. frittierten Teiglingen angeordnet werden.

Das tierische pulverförmigen Protein ist bevorzugt Eiklarpulver, das z.B. einen Wassergehalt von ca. 8%, pH 6-8, min. 80% Protein, im Wesentlichen kein Fett, max. 6% Asche, max. 600 mg/kg Milchsäure, max. 25 mg/kg Bernsteinsäure, max. 10 mg/kg beta-Hydroxybuttersäure hat, jeweils vor Entzuckerung.

Erbsenproteinisolat hat z.B. <5% Wasser, < 6 % Asche.

Molkeprotein hat z.B. max. 7,5 % Gesamtzucker, 76 % Protein, max. 0,2 % Gesamtfett,

Molkeproteinhydrolysat hat z.B. min. 76 %, bevorzugt min 80 % bis 82 % Protein, max. 7,5 % Lactose, max. 0,2 % Gesamtfett, max. 6 % Wasser. Bevorzugt hat das Molkeproteinhydrolysat einen Hydrolysegrad von 20-30% und ein mittleres Molekulargewicht von 750-1100, z.B. gemessen als Absorption bei 214 nm, und/oder einen hohen Gehalt von Di- und Tripeptiden, z.B. von min 80 % Di- und Tripeptide, und bildet niedrig viskose Lösungen.

Das erste tierische Proteinhydrolysat hat z.B. min. 90 % Protein, ca. 0,5 % Gesamtfett, max. 7 bis max. 10% Asche, max. 10 % bis max. 8 % Wasser.

Das zweite tierische Proteinhydrolysat hat z.B. 80 bis 85 % Protein, 12-15 % Gesamtfett, 9 bis 12 % Wasser und ist vorzugsweise wasserunlöslich und quellfähig in Wasser.

Optional können das erste tierische Proteinhydrolysat und das zweite tierische Proteinhydrolysat, die auch als erstes bzw. zweites Fleischproteinhydrolysat bezeichnet werden können, identisch sein.

Casein und/oder Caseinat ist vorzugsweise durch enzymatische Fällung aus Milch hergestellt, insbesondere durch Fällung mittels Rennin oder Säure, Abtrennen, Waschen, Trocknen und Mahlen. Casein weist z.B. 80 - 85 %, bevorzugt ca. 89 % Protein, max. 1 % Gesamtfett, max. 12 bis max. 10,5 %, pulverförmig bevorzugt max. 6 % Wasser auf.

Das Molkeprotein ist vorzugsweise ein hochgelierendes Molkeprotein, z.B. mit einer Gelfestigkeit von zumindest 8N oder von zumindest 10 N, bevorzugt von zumindest 12 N, bevorzugter von zumindest 14 bis zumindest 15 N, insbesondere von 12 bis 15 N, wie mit dem Penetrometer mit einer zylindrischen Sonde von 1 cm² Querschnitt bei einer Eindringtiefe von 20 mm bei 0,5mm/s, insbesondere im folgenden Testverfahren feststellbar ist: 127,5 mL dest. Wasser vorlegen, 22,5 g Molkeproteinpulver einrühren, 2-3 Tropfen Octanol zugeben, bei mittlerer Drehzahl mit einem Rührer bis zum vollständigen Lösen dispergieren, Schaum vollständig absetzen lassen, ca. 5 min im Wasserbad auf 75°C temperieren, dann 45 min zum Kochen bringen, anschließend im Wasserbad auf 20°C kühlen, 90 min bis 12h im Kühlschrank (ca. 0-5°C) kühlen, Eindringkraft mit dem Penetrometer messen, z.B. an 5 Stellen. Das Penetrometer, auf eine Eindringtiefe von 20 mm bei 0,5 mm/s eingestellt, kann mit einer Last von 1000 g auf 1000 und ohne Last auf 0 kalibriert werden.

Als Aroma kann ein bitteres Aroma verwendet werden. Bevorzugte Aromen sind Kaffeearoma, Birnenaroma, Citrusaroma und Mischungen dieser.

### Genaue Beschreibung der Erfindung

Die Erfindung wird genauer anhand von Beispielen mit Bezug auf die Figuren beschrieben, in denen
- Figur 1 eine Graphik der Messungen der erforderlichen Schnittkraft in einem Riegel über die Lagerdauer bei Raumtemperatur zeigt, der aus der erfindungsgemäßen Nahrungsmittelzusammensetzung besteht,
- Figur 2 das Ergebnis der Partikelgrößenanalyse des bevorzugten ersten tierischen Proteinhydrolysats zeigt,
- Figur 3 das Ergebnis der Partikelgrößenanalyse von Erbsenproteinisolat zeigt,
- Figur 4 das Ergebnis der Partikelgrößenanalyse eines bevorzugten zweiten tierischen Proteinhydrolysats zeigt,
- Figur 5 das Ergebnis der Partikelgrößenanalyse eines bevorzugten Molkeproteins zeigt,
- Figur 6 das Ergebnis der Partikelgrößenanalyse eines bevorzugten Eiklarpulvers zeigt,
- Figur 7 das Ergebnis einer Partikelgrößenanalyse eines bevorzugten Caseins zeigt und
- Figur 8 das Ergebnis der Partikelgrößenanalyse eines bevorzugten Molkeproteinhydrolysats zeigt.

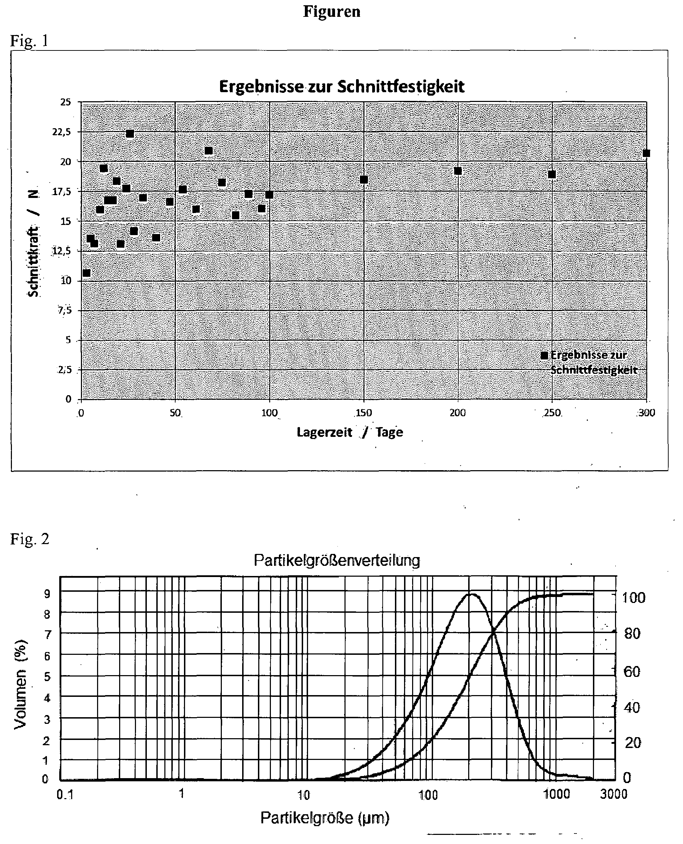

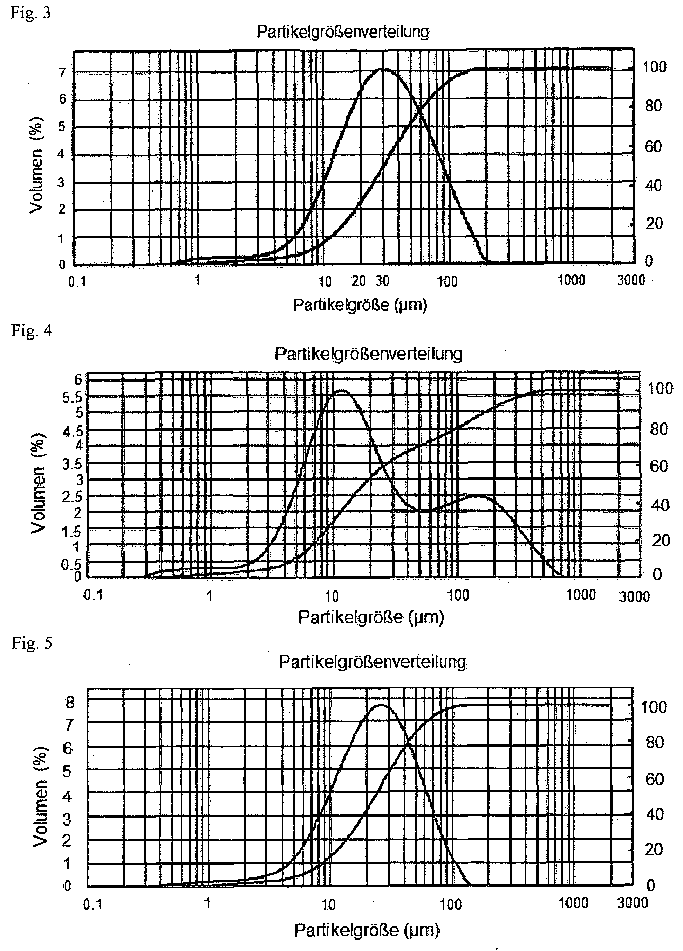

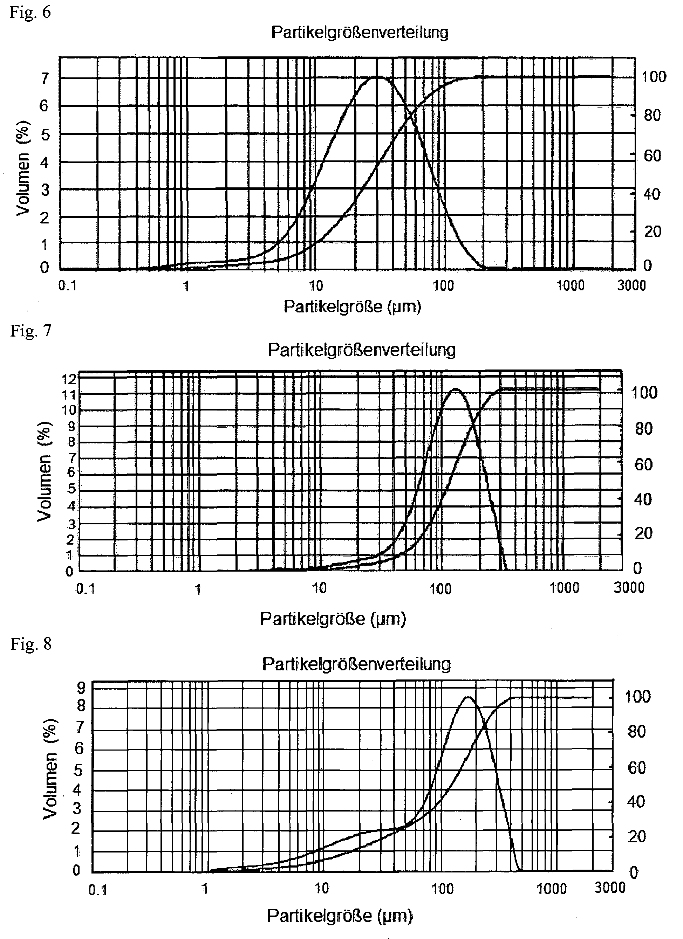

Die erfindungsgemäß bevorzugten proteinhaltigen Bestandteile weisen im pulverförmigen Zustand eine Partikelgrößenverteilung auf, wie sie in den Figuren 2 bis 8 gezeigt ist. In diesen Figuren gibt die Glockenkurve die Größenverteilung der Partikel nach Volumenanteil wieder und die S-förmige Kurve die summierten Volumenanteile der Partikel bis zu der angegebenen Partikelgröße. Die Partikelgrößenverteilungen wurden mit einem Malvern Mastersizer 2000 Version 5.60 (Malvern Instruments, GB) nach Angaben des Herstellers bestimmt.

### Beispiel 1: Proteinriegel mit 55 - 67 Gew.-% Protein in Gesamtmasse

Als Beispiel für eine Nahrungsmittelzusammensetzung wurden
5 Gew.-% tierisches Protein (80,0 Gew.-% Protein),
8 Gew.-% pflanzliches Proteinisolat (83,6 Gew.-% Protein) als pflanzliches Proteinisolat,
5 Gew.-% Molkeprotein (80,0 Gew.-% Protein),
21,5 Gew.-% Molkenproteinhydrolysat (88,0 Gew.-% Protein),
6,5 Gew.-% eines ersten tierischen Proteinhydrolysats (82,5 Gew.-% Protein),
8,5 Gew.-% eines zweiten tierischen Proteinhydrolysats (90,0 Gew.-% Protein) und
22 Gew.-% Casein (90,0 Gew.-% Protein)
mit einem Knethaken oder Planetenrührwerk satzweise gemischt. Die in Klammern angegebenen Werte geben den Proteingehalt des jeweiligen Inhaltsstoffs an. Als Aroma wurde Kaffeearoma und/oder Pampelmusenaroma zu 0,3 Gew.-% in 4 Gew.-% Pflanzenöl verteilt, mit 8 Gew.-% Wasser und 0,2 Gew.-% Süßstoff (Aspartam) emulgiert und mit 11 Gew.-% Glycerin als Polyol mit demselben Mischer in die Pulvermischung eingemischt. Die fertig gemischte Masse wurde auf ca. 1 cm ausgewalzt und in Riegel geschnitten. Die Riegel wurden zur Lagerung in Kunststofffolie eingeschweißt, um ein Austrocknen zu vermeiden. Der überprüfte a_{w}-Wert lag unter 0,6.

An den ausgeformten Riegeln wurde über 300 Tage Lagerung bei Raumtemperatur (20 bis 25 °C) die Schnittkraft mit einem Textureanalyzer TA-XT2, Dimension Stable Micro Systems, bestimmt. Die Nahrungsmittelzusammensetzung ist über die gesamte Versuchsdauer verzehrfähig und weist ein weiches Mundgefühl und einen zarten Biss auf. Als objektiver Parameter wurde die Schnittkraft bestimmt, die Ergebnisse sind in Figur 1 gezeigt. Die Messungen zeigen, dass die als Schnittkraft bestimmte Festigkeit über die Lagerdauer im Wesentlichen konstant bleibt und keine Aushärtung oder Verflüssigung stattfindet. Diese Werte zeigen, dass die Bißfestigkeit, bestimmt als Schnittfestigkeit, auch über eine Lagerdauer von 300 Tagen etwa konstant bleibt bzw. leicht ansteigt, wobei nach 300 Tagen eine Schnittfestigkeit im Textureanalyzer von 20,7N ermittelt wurde. Dies zeigt, dass die Nahrungsmittelzusammensetzung lagerstabil und verzehrfähig ist. Eine mikrobiologische und sensorische Prüfung ergab, dass die Riegel die an Nahrungsmittel gestellten Anforderungen erfüllen.

Zum Vergleich wurde eine Mischung hergestellt, die aus denselben Inhaltsstoffen bestand, jedoch ohne das erste und ohne das zweite tierische Proteinhydrolysat. Diese Vergleichsmischung wurde identisch gemischt und aufgeformt. Diese Masse wies spätestens nach einer Lagerdauer von 20 Tagen eine Schnittfestigkeit von zumindest 65N bis über den Messbereich im Textureanalyzer auf. Dies zeigt, dass insbesondere die tierischen Proteinhydrolysate für eine Festigkeit von Bedeutung sind, die für eine Verzehrfähigkeit der Zusammensetzung erforderlich ist.

### Beispiel 2: Proteinriegel mit 55 - 67 Gew.-% Protein in Gesamtmasse und zusätzlichem Schokoladenüberzug

Nach dem Verfahren von Beispiel 1 wurde eine Nahrungsmittelzusammensetzung aus den gleichen Bestandteilen durch Mischen bei Raumtemperatur hergestellt:
7 Gew.-% Wasser,
0,2 Gew.-% Süßstoff,
5 Gew.-% tierisches Protein und/oder Eiklarhydrolysatpulver,
5 Gew.-% pflanzliches Proteinisolat,
5 Gew.-% hochgelierendes Molkeprotein,
15,15 Gew.-% Molkenproteinhydrolysat,
6,5 Gew.-% des ersten tierischen Proteinhydrolysats,
8,5 Gew.-% des zweiten tierischen Proteinhydrolysats,
33 Gew.-% Casein,
0,65% Aroma, vorzugsweise Pampelmusenaroma,
10 Gew.-% Glycerin,
4 Gew.-% Pflanzenöl.

In den Beispielen hatte das erste tierische Proteinhydrolysat zu 42 Gew.-% eine Molekülmasse >100 kDa, zu 23 Gew.-% eine Molekülmasse von 100-30kDa, zu 8 Gew.-% eine Molekülmasse von 30-20kDa, zu 9 Gew.-% eine Molekülmasse von 20-5kDa, zu 3 Gew.-% eine Molekülmasse von 5-0,6kDa, zu 6 Gew.-% dimere AS und zu 8 Gew.-% monomere AS.

Das zweite tierische Proteinhydrolysat hatte in den Beispielen zu 5 Gew.-% eine Molekülmasse >10kDa, zu 45 Gew.-% eine Molekülmasse von 10-5kDa, zu 40 Gew.-% eine Molekülmasse von 5-3kDa, zu 8 Gew.-% eine Molekülmasse von 3-0,6kDa, zu <1 Gew.-% dimere AS, und zu <1 Gew.-% monomere AS.

Diese Nahrungsmittelzusammensetzung hatte einen Proteingehalt in der Gesamtmasse von 67 Gew.-%, zeigt die für Proteinriegel typische feste Struktur, und bleibt auch von einer Lagerdauer von mindestens 30 Tagen bei Raumtemperatur verzehrfähig, und hat insbesondere einen zarten Biss.

Nach Ausformen von Riegeln durch Auswalzen und Schneiden zu Stücken von 62 g wurden diese mit jeweils 8 g Vollmilchschokolade überzogen. Eine Analyse des Riegels aus der Nahrungsmittelzusammensetzung einschließlich der Schokoladenummantelung ergab die folgenden Nährwerte (Big8, erweitert):
13,3 Gew.-% Wasser,
3,88 Gew.-% Asche,
60,0 Gew.-% Protein,
8,8 Gew.-% Fett,
16,0 % Kohlenhydrate,
<1 Gew.-% Ballaststoffe insgesamt,
3,78 Gew.-% Saccharose,
< 0,2 Gew.-% jeweils Glucose und Fructose, < 0,5 Gew.-% jeweils Maltose und Lactose,
9,24 Gew.-% Glycerin,
11,0 Gew.-% Zucker als Summe der Mono- und Disaccharide,
3,92 Gew.-% gesättigte Fettsäuren als Triglyceride,
2,81 Gew.-% einfach ungesättigte Fettsäuren als Triglyceride, 0,08 Gew.-% trans-Fettsäuren als Triglyceride,
395 mg / 100 g Natrium, berechneter Brennwert 1636 kJ pro 100 g.

### Beispiel 3: Proteinriegel mit 65 - 68 Gew.-% Protein in Gesamtmasse

Die folgenden Zusammensetzungen ergaben durch Mischen der pulverförmigen proteinhaltigen Bestandteile mit den weiteren Bestandteilen nach dem Verfahren von Beispiel 1 lagerstabile Riegelmassen, die ebenfalls eine weiche, verzehrfähige Konsistenz nach Lagerung aufwiesen:

**Nahrungsmittelzusammensetzungen: Bestandteile in Gew.-%**

| | Zusammensetzung Nr. | | | |
|---|---|---|---|---|
| Bestandteil | 3-1 | 3-2 | 3-3 | 3-4 |
| Süßstoff | 0,20 | 0,17 | 0,17 | 0,18 |
| Eiklarpulver | 5,01 | 6,28 | 6,43 | 4,62 |
| Erbsenproteinisolat | 5,01 | 6,28 | 6,00 | 4,62 |
| Molkeprotein | 5,01 | 4,19 | 4,29 | 4,62 |
| Molkeproteinhydrolysat | 15,19 | 12,69 | 19,48 | 14,00 |
| erstes tierisches Proteinhydroylsat | 6,52 | 5,44 | 5,57 | 6,00 |
| zweites tierisches Proteinhydroylsat | 8,52 | 7,12 | 8,01 | 15,70 |
| Casein | 33,08 | 27,63 | 28,28 | 30,48 |
| Gluten | 0 | 12,28 | 3,43 | 0 |
| Karamellaroma | 0,06 | 0,05 | 0,05 | 0,06 |
| Kaffeearoma | 0,21 | 0,18 | 0,18 | 0,20 |
| Birnenaroma | 0,13 | 0,11 | 0,11 | 0,12 |
| Glycerin | 10,02 | 8,37 | 8,57 | 9,24 |
| Sonnenblumenöl | 4,01 | 3,35 | 3,43 | 3,69 |
| Summe Protein (rechnerisch, %) | 65,14 (analytisch: 65,50 %) | 67,31 | 67,29 | 67,30 |

Diese Beispiele zeigen, dass auch hohe Gehalte pflanzlichen Proteins zu einer verzehrfähigen, hoch proteinhaltigen Nahrungsmittelzusammensetzung führen, und dass das pflanzliche Proteinisolat auch eine Mischung verschiedener pflanzlicher Proteinisolate sein kann.

Diese Zusammensetzungen eigneten sich insbesondere für den Überzug mit Schokolade, z.B. mit einem Anteil Schokolade von ca. 11,5 % an der Gesamtmasse. Durch diesen Überzug wurde der Proteingehalt am gesamten Nahrungsmittel einschließlich des Schokoladenüberzugs um ca. 7 Gew.-% auf 58 bis 59,6 Gew.-% Protein am Gesamtgewicht reduziert.

## Patentansprüche

1. Nahrungsmittelzusammensetzung mit einem Proteingehalt von zumindest 50 Gew.-%, an der Gesamtmasse, die
3 bis 20 Gew.-% tierisches Protein, das Fleischpulver, Eiklarpulver und/oder Eiklarhydrolysatpulver ist,
3 bis 20 Gew.-% pflanzliches Proteinisolat,
3 bis 20 Gew.-% Molkeprotein,
5 bis 30 Gew.-% Molkeproteinhydrolysat,
2 bis 17 Gew.-% eines ersten tierischen Proteinhydrolysats,
5 bis 20 Gew.-% eines zweiten tierischen Proteinhydrolysats,
0 bis 35 Gew.-%, insbesondere 20 bis 35 Gew.-% Casein und/oder Caseinat,
5 bis 15 Gew.-% zumindest eines Feuchthaltemittels und
1 bis 10 Gew.-% zumindest eines tierischen oder pflanzlichen Öls aufweist und eine Dichte von zumindest 0,6kg/L und eine Schnittfestigkeit bei 20°C von max. 25N bei einer Klinge mit einer Schnittbreite von 20mm und einer Schnittgeschwindigkeit von 2,0mm/s hat.

2. Nahrungsmittelzusammensetzung nach Anspruch 1, **dadurch gekennzeichnet, dass** die Nahrungsmittelzusammensetzung 0,1 bis 0,3 Gew.-% Süßstoff und 0,1 bis 2 Gew.-% zumindest eines Aromas enthält.

3. Nahrungsmittelzusammensetzung nach einem der voranstehenden Ansprüche, **gekennzeichnet durch** einen a_{w}-Wert von maximal 0,6.

4. Nahrungsmittelzusammensetzung nach einem der voranstehenden Ansprüche, **dadurch gekennzeichnet, dass** die Nahrungsmittelzusammensetzung aus einer Mischung besteht, die aus
3 bis 20 Gew.-% tierischem Protein,
3 bis 20 Gew.-% pflanzlichem Proteinisolat,
3 bis 20 Gew.-% Molkeprotein,
5 bis 30 Gew.-% Molkeproteinhydrolysat,
2 bis 17 Gew.-% eines ersten tierischen Proteinhydrolysats,
5 bis 20 Gew.-% eines zweiten tierischen Proteinhydrolysats,
optional 20 bis 35 Gew.-% Casein und/oder Caseinat,
jeweils bestimmt als in der Zusammensetzungen enthaltenes Proteinpulver,
0,3 bis 2 Gew.-% zumindest eines Aromas,
5 bis 15 Gew.-% zumindest eines Feuchthaltemittels,
1 bis 10 Gew.-% zumindest eines tierischen oder pflanzlichen Öls,
mit einem Gehalt von 3 bis 20 Gew.-% Wasser und
0 bis 1 Gew.-% Süßstoff besteht.

5. Nahrungsmittelzusammensetzung nach einem der voranstehenden Ansprüche, **dadurch gekennzeichnet, dass** das pflanzliche Proteinisolat ausgewählt ist aus der Gruppe, die aus Erbsenproteinisolat, Kartoffelproteinisolat, Gluten, Sojaproteinisolat und Mischungen dieser besteht.

6. Nahrungsmittelzusammensetzung nach einem der voranstehenden Ansprüche, **dadurch gekennzeichnet, dass** das erste tierische Proteinhydrolysat 32 bis 52 Gew.-% einer Fraktion>100 kDa, 13 bis 33 Gew.-% einer Fraktion von 100 bis 30 kDa, 5 bis 10 Gew.-% einer Fraktion von 20 bis 30 kDa, und 9 bis 18% einer Gewichtsfraktion von 0,6 bis 20 kDa sowie monomere und dimere Aminosäuren zu 3 bis 20 Gew.-% aufweist und das zweite tierische Proteinhydrolysat 2 bis 8 Gew.-% der Fraktion mit > 10 kDa, 35 bis 55 Gew.-% einer Fraktion von 10 bis 5 kDa, 30 bis 50 Gew.-% einer Fraktion von 5 bis 3 kDa, 5 bis 11 Gew.-% einer Fraktion von 3 bis 0,6 kDa und 0 bis 4 Gew.-% monomerer und dimerer Aminosäuren aufweist.

7. Nahrungsmittelzusammensetzung nach einem der voranstehenden Ansprüche, **dadurch gekennzeichnet, dass** sie hergestellt ist durch Mischen und Formen von tierischem Protein, das Fleischpulver, Eiklarpulver und/oder Eiklarhydrolysatpulver ist und zu 70-90 Gew.-% eine Partikelgröße im Bereich 3-88µm aufweist,
pflanzlichem Proteinisolat, das zu 70-90 Gew.-% eine Partikelgröße im Bereich 2,5-70µm aufweist,
Molkeprotein, das zu 70-90 Gew.-% eine Partikelgröße im Bereich 1-250µm aufweist, Molkeproteinhydrolysat, das zu 70-90 Gew.-% eine Partikelgröße im Bereich 5-283µm aufweist,
dem ersten tierischen Proteinhydrolysat, das zu 70-90 Gew.-% eine Partikelgröße im Bereich 31-250µm aufweist,
dem zweiten tierischen Proteinhydrolysat, das zu 70-90 Gew.-% eine Partikelgröße im Bereich 60-450µm aufweist und
Casein und/oder Caseinat, das zu 70-90 Gew.-% eine Partikelgröße im Bereich 40-230µm aufweist.

8. Nahrungsmittelzusammensetzung nach einem der voranstehenden Ansprüche, **dadurch gekennzeichnet, dass** sie erhältlich ist durch Mischen und anschließendes Pressen und Schneiden der Mischung, jeweils bei einer Temperatur unterhalb der Siedetemperatur von Wasser, bevorzugt unterhalb 30°C.

9. Nahrungsmittelzusammensetzung nach einem der voranstehenden Ansprüche, **dadurch gekennzeichnet, dass** die Nahrungsmittelzusammensetzung zumindest einseitig eine Schicht aus Süßwarenmasse oder gebackenem oder frittiertem Teig aufweist.

10. Verfahren zur Herstellung einer Nahrungsmittelzusammensetzung mit einem Proteingehalt von zumindest 50 Gew.-%, an der Gesamtmasse, mit den Schritten des Mischens von
3 bis 20 Gew.-% pulverförmigem tierischem Protein, das Fleischpulver, Eiklarpulver, und/oder Eiklarhydrolysatpulver ist,
3 bis 20 Gew.-% pulverförmigem pflanzlichem Proteinisolat,
3 bis 20 Gew.-% pulverförmigem Molkeprotein,
5 bis 30 Gew.-% pulverförmigem Molkeproteinhydrolysat,
2 bis 17 Gew.-% eines pulverförmigem ersten tierischen Proteinhydrolysats,
5 bis 20 Gew.-% eines pulverförmigem zweiten tierischen Proteinhydrolysats,
20 bis 35 Gew.-% pulverförmigem Casein und/oder Caseinat,
zur Erzeugung einer Pulvermischung,
des Zumischens von 5 bis 10 Gew.-% Wasser, 5 bis 15 Gew.-% zumindest eines Feuchthaltemittels, 1 bis 10 Gew.-% zumindest eines tierischen oder pflanzlichen Öls und 0 bis 2 Gew.-% zumindest eines Aromas zu der Pulvermischung,
und des Ausformens zu einer massiven Masse mit einer Dichte von zumindest 0,6 kg/L.

11. Verfahren nach Anspruch 10, **dadurch gekennzeichnet, dass** die ausgeformte Nahrungsmittelzusammensetzung mit einer Beschichtung aus Süßwarenmasse überzogen wird oder aus Mehl-Wasser-Teig überzogen und erwärmt wird oder auf einem gebackenen oder fritterten Teigling angeordnet wird.

12. Verfahren nach einem der Ansprüche 10 bis 11, **dadurch gekennzeichnet, dass**
das tierische Protein Fleischpulver, Eiklarpulver und/oder das Eiklarhydrolysatpulver ist, das zu 70-90 Gew.-% eine Partikelgröße im Bereich 3-88µm aufweist,
das pflanzliche Proteinisolat zu 70-90 Gew.-% eine Partikelgröße im Bereich 2,5-70µm aufweist,
das Molkeprotein zu 70-90 Gew.-% eine Partikelgröße im Bereich 1-250µm aufweist, das Molkeproteinhydrolysat zu 70-90 Gew.-% eine Partikelgröße im Bereich 5-283µm aufweist,
das erste tierische Proteinhydrolysat zu 70-90 Gew.-% eine Partikelgröße im Bereich 31-250µm,
das zweite tierische Proteinhydrolysat zu 70-90 Gew.-% eine Partikelgröße im Bereich 60-450µm und das
Casein und/oder Caseinat zu 70-90 Gew.-% eine Partikelgröße im Bereich 40-230µm aufweist.

13. Verfahren nach einem der Ansprüche 10 bis 12, **dadurch gekennzeichnet, dass** vor dem Zumischen des tierischen oder pflanzlichen Öls und des Wassers zu der Pulvermischung fettlösliche Bestandteile des zumindest einen Aromas mit dem tierischen oder pflanzlichen Öl vermischt werden und wasserlösliche Bestandteile des zumindest einen Aromas mit dem Wasser vermischt werden.

14. Verfahren nach einem der Ansprüche 10 bis 13, **dadurch gekennzeichnet, dass** das erste tierische Proteinhydrolysat 32 bis 52 Gew.-% einer Fraktion >100 kDa, 13 bis 33 Gew.-% einer Fraktion von 100 bis 30 kDa, 5 bis 10 Gew.-% einer Fraktion von 20 bis 30 kDa, und 9 bis 18% einer Gewichtsfraktion von 0,6 bis 20 kDa sowie monomere und dimere Aminosäuren zu 3 bis 20 Gew.-% aufweist und das zweite tierische Proteinhydrolysat 2 bis 8 Gew.-% einer Fraktion mit > 10 kDa, 35 bis 55 Gew.-% einer Fraktion von 10 bis 5 kDa, 30 bis 50 Gew.-% einer Fraktion von 5 bis 3 kDa, 5 bis 11 Gew.-% einer Fraktion von 3 bis 0,6 kDa und 0 bis 4 Gew.-% monomerer und dimerer Aminosäuren aufweist.

## Claims

1. Food composition having a protein content of at least 50% by weight of the total mass, comprising
3 to 20% by weight animal protein, which is powdered meat, powder of white of egg and/or powder of white of egg hydrolysate,
3 to 20% by weight plant protein isolate,
3 to 20% by weight whey protein,
5 to 30% by weight whey protein hydrolysate,
2 to 17% by weight of a first animal protein hydrolysate,
5 to 20% by weight of a second animal protein hydrolysate,
0 to 35% by weight, especially 20 to 35% by weight casein and/or caseinate,
5 to 15% by weight of at least one moisturizing agent and
1 to 10% by weight of at least one animal or plant oil and having a density of at least
0.6 kg/L and a cutting resistance at 20°C of at maximum 25 N using a blade having a cutting breadth of 20 mm and a cutting speed of 2.0 mm/s.

2. Food composition according to claim 1, **characterized in that** the food composition contains 0.1 to 0.3% by weight sweetener and 0.1 to 2% by weight of at least one flavour.

3. Food composition according to one of the preceding claims, **characterized by** an a_{w} value of maximally 0.6.

4. Food composition according to one of the preceding claims, **characterized in that** the food composition consists of a mixture consisting of
3 to 20% by weight animal protein,
3 to 20% by weight plant protein isolate,
3 to 20% by weight whey protein,
5 to 30% by weight whey protein hydrolysate,
2 to 17% by weight of a first animal protein hydrolysate,
5 to 20% by weight of a second animal protein hydrolysate,
optionally 20 to 35% by weight casein and/or caseinate,
each determined as protein powder contained in the composition,
0.3 to 2% by weight of at least one flavour,
5 to 15% by weight of at least one moisturizing agent,
1 to 10% by weight of at least one animal or plant oil,
having a content of 3 to 20% by weight water and
0 to 1% by weight sweetener.

5. Food composition according to one of the preceding claims, **characterized in that** the plant protein isolate is selected from the group consisting of pea protein isolate, potato protein isolate, gluten, soy protein isolate and mixtures of these.

6. Food composition according to one of the preceding claims, **characterized in that** the first animal protein hydrolysate has 32 to 52% by weight of a fraction > 100 kDa, 13 to 33% by weight of a fraction of 100 to 30 kDa, 5 to 10% by weight of a fraction of 20 to 30 kDa, and 9 to 18% of a weight fraction of 0.6 to 20 kDa as well as monomeric and dimeric amino acids to 3 to 20% by weight, and that the second animal protein hydrolysate has 2 to 8% by weight of the fraction of > 10 kDa, 35 to 55% by weight of a fraction of 10 to 5 kDa, 30 to 50% by weight of a fraction of 5 to 3 kDa, 5 to 11% by weight of a fraction of 3 to 0.6 kDa and 0 to 4% by weight of monomeric and dimeric amino acids.

7. Food composition according to one of the preceding claims, **characterized in that** it is produced by mixing and forming of animal protein, which is powdered meat, powder of white of egg and/or powder of white of egg hydrolysate and has a particle size in the range of 3 - 88 µm for 70 - 90% by weight,
plant protein isolate having a particle size in the range of 2.5 - 70 µm for 70 - 90% by weight,
whey protein having a particle size in the range of 1 - 250 µm for 70 - 90% by weight, whey protein hydrolysate having a particle size in the range of 5 -283 µm for 70 - 90% by weight,
the first animal protein hydrolysate having a particle size in the range of 31 - 250 µm for 70 - 90% by weight,
the second animal protein hydrolysate having a particle size in the range of 60 - 450 µm for 70 - 90% by weight, and
casein and/or caseinate having a particle size in the range of 40 - 230 µm for 70 - 90% by weight.

8. Food composition according to one of the preceding claims, **characterized in that** it is obtainable by mixing and subsequent pressing and cutting of the mixture, each at a temperature below the boiling temperature of water, preferably below 30°C.

9. Food composition according to one of the preceding claims, **characterized in that** the food composition at least on one side has a layer of a sweet mass or of baked or deep fried dough.

10. Process for producing a food composition having a protein content of the least 50% by weight of the total mass with the steps of mixing of
3 to 20% by weight animal protein in powder form, which is powdered meat, powder of white of egg and/or powder of white of egg hydrolysate,
3 to 20% by weight plant protein isolate in powder form,
3 to 20% by weight whey protein in powder form,
5 to 30% by weight whey protein hydrolysate in powder form,
2 to 17% by weight of a first animal protein hydrolysate in powder form,
5 to 20% by weight of a second animal protein hydrolysate in powder form,
20 to 35% by weight casein and/or caseinate in powder form,
for generating a powder mixture,
admixing to the powder mixture 5 to 10% by weight water,
5 to 15% by weight of at least one moisturizing agent,
1 to 10% by weight of at least one animal or plant oil and 0 to 2% by weight of at least one flavour and forming to a solid mass having a density of at least 0.6 kg/L.

11. Process according to claim 10, **characterized in that** the formed food composition is covered with a coating of sweet mass or of a flour-water-dough and is heated or is arranged on baked or deep-fried dough-body.

12. Process according to one of claims 10 to 11, **characterized in that** the
animal protein is powdered meat, powder of white of egg and/or powder of white of egg hydrolysate and has a particle size in the range of 3 - 88 µm for 70 - 90% by weight,
the plant protein isolate has a particle size in the range of 2.5 - 70 µm for 70 - 90% by weight,
the whey protein has a particle size in the range of 1 - 250 µm for 70 - 90% by weight, the whey protein hydrolysate has a particle size in the range of 5 -283 µm for 70 - 90% by weight,
the first animal protein hydrolysate has a particle size in the range of 31 - 250 µm for 70 - 90% by weight,
the second animal protein hydrolysate has a particle size in the range of 60 - 450 µm for 70 - 90% by weight, and
the casein and/or caseinate has a particle size in the range of 40 - 230 µm for 70 - 90% by weight.

13. Process according to one of claims 10 to 12, **characterized in that** prior to admixing of the animal or plant oil and of the water to the powder mixture, liposoluble components of the at least one flavour are admixed with the animal or plant oil and water soluble components of the at least one flavour are admixed with the water.

14. Process according to one of claims 10 to 13, **characterized in that** the first animal protein hydrolysate has 32 to 52% by weight of a fraction > 100 kDa, 13 to 33% by weight of a fraction of 100 to 30 kDa, 5 to 10% by weight of a fraction of 20 to 30 kDa, and 9 to 18% of a weight fraction of 0.6 to 20 kDa as well as monomeric and dimeric amino acids to 3 to 20% by weight, and that the second animal protein hydrolysate has 2 to 8% by weight of a fraction of > 10 kDa, 35 to 55% by weight of a fraction of 10 to 5 kDa, 30 to 50% by weight of a fraction of 5 to 3 kDa, 5 to 11% by weight of a fraction of 3 to 0.6 kDa and 0 to 4% by weight monomeric and dimeric amino acids.

## Revendications

1. Composition alimentaire avec une teneur en protéine d'au moins 50% en poids de masse totale, qui présente
3 à 20% en poids de protéine animale, constitué de poudre de viande, de poudre de blanc d'oeuf et/ou de poudre d'hydrolysat de blanc d'oeuf,
3 à 20% en poids d'isolat de protéine végétal,
3 à 20% en poids de protéine de petit lait,
5 à 30% en poids d'hydrolysat de protéine de petit lait,
2 à 17% en poids d'un premier hydrolysat de
protéine animale,
5 à 20% de poids d'un second hydrolysat de
protéine animale,
0 à 35% en poids, en particulier 20 à 35% en poids de caséine et/ou de caséinate,
5 à 15% en poids au moins d'un humectant et
1 à 10% en poids au moins d'une huile animale ou végétale, et une densité d'au moins 0,6kg/L et une résistance à la coupe à 20°C d'au moins 25N avec une lame d'une largeur de coupe de 20 mm et une vitesse de coupe de 2,0 mm/s.

2. Composition alimentaire selon l'une des revendications précédentes, **caractérisée en ce que** la composition alimentaire contient 0,1 à 0,3% en poids d'édulcorant et 0,1 à 2% en poids au moins d'un arôme.

3. Composition alimentaire selon l'une des revendications précédentes, **caractérisée par** une valeur a_{w} de 0,6 maximum.

4. Composition alimentaire selon l'une des revendications précédentes, **caractérisée en ce que** la composition alimentaire est constituée d'un mélange, composée de
3 à 20% en poids de protéine animale,
3 à 20% en poids d'isolat de protéine végétal,
3 à 20% en poids de protéine de petit lait,
5 à 30% en poids d'hydrolysat de protéine de petit lait,
2 à 17% en poids d'un premier hydrolysat de protéine animale,
5 à 20% de poids d'un second hydrolysat de protéine animale,
éventuellement 20 à 35% en poids de caséine et/ou de caséinate
définis respectivement comme poudre de protéine contenue dans les compositions,
0,3 à 2% en poids au moins d'un arôme,
5 à 15% en poids au moins d'un humectant,
1 à 10% en poids au moins d'une huile animale ou végétale,
avec une teneur de 3 à 20% en poids d'eau et
0 à 1% en poids d'édulcorant.

5. Composition alimentaire selon l'une des revendications précédentes, **caractérisée en ce que** l'isolat de protéine végétal est sélectionné parmi le groupe composé d'isolat de protéine de pois, d'isolat de protéine de pommes de terre, de gluten, d'isolat de protéiné de soja et de mélanges de ceux-ci.

6. Composition alimentaire selon l'une des revendications précédentes, **caractérisée en ce que** le premier hydrolysat de protéine animale présente 32 à 52% en poids d'une fraction > 100 kDa, 13 à 33% en poids d'une fraction de 100 à 30 kDa, 5 à 10% en poids d'une fraction de 20 à 30 kDa et 9 à 18% d'une fraction en poids de 0,6 à 20 kDa de même que des acides aminés monomères et dimères à concurrence de 3 à 20% en poids et le second hydrolysat de protéine animale présente 2 à 8% en poids de la fraction avec > 10 kDa, 35 à 55% en poids d'une fraction de 10 à 5 kDa, 30 à 50% en poids d'une fraction de 5 à 3 kDa, 5 à 11% en poids d'une fraction de 3 à 0,6 kDa et de 0 à 4% en poids d'acides aminés monomères et dimères.

7. Composition alimentaire selon l'une des revendications précédentes, **caractérisée en ce qu'**elle est obtenue par mélange et formage de protéine animale constituée de poudre de viande, de poudre de blanc d'oeuf et/ou de poudre d'hydrolysat de blanc d'oeuf et présente une taille de particules dans la fourchette de 3-88 µm pour 70-90% en poids, de l'isolat de protéine végétale avec une taille de particules dans la fourchette de 2,5-70 µm pour 70-90%, d'une protéine de petit lait avec une taille de particules dans la fourchette de 1-250 µm pour 70-90% en poids, d'un hydrolysat de protéine de petit lait avec une taille de particules dans la fourchette de 5-283 µm pour 70-90% en poids, du premier hydrolysat de protéine animale avec une taille de particules dans la fourchette de 31-250 µm pour 70-90% en poids, du second hydrolysat de protéine animale avec une taille de particules dans la fourchette de 60-450 µm pour 70-90% en poids et
de caséine et/ou de caséinate avec une taille de particules dans la fourchette de 40-230 µm pour 70-90% en poids.

8. Composition alimentaire selon l'une des revendications précédentes, **caractérisée en ce qu'**elle est disponible par mélange avant compression et coupure subséquentes du mélange, toujours à une température inférieure à la température d'ébullition de l'eau, de préférence inférieure à 30°C.

9. Composition alimentaire selon l'une des revendications précédentes, **caractérisée en ce que** la composition alimentaire présente au moins d'une part une couche de masse de confiserie ou de pâte cuite ou fritte.

10. Procédé de fabrication d'une composition alimentaire avec une teneur en protéine d'au
moins 50% en poids de la masse totale, avec les phases de mélange de
3 à 20% en poids de protéine animale pulvérulente, constituée de poudre de viande, de poudre de blanc d'oeuf et/ou de poudre d'hydrolysat de blanc d'oeuf
3 à 20% en poids d'isolat de protéine végétale pulvérulente,
3 à 20% en poids d'une protéine de petit lait pulvérulent,
5 à 30% en poids d'hydrolysat de petit lait pulvérulent,
2 à 17% en poids d'un premier hydrolysat de protéine animale pulvérulente,
5 à 20% en poids d'un second hydrolysat de protéine animale pulvérulente,
20 à 35% en poids de caséine et/ou de caséinate pulvérulente
pour la production d'un mélange de poudre, le mélange de 10% en poids d'eau maximum, de 5 à 15% en poids au moins d'un humectant, 1 à 10% en poids au moins d'une huile animale ou végétale et 0 à 2% en poids au moins d'un arôme par rapport au mélange de poudre, et la sortie de moule pour obtenir une masse compacte d'une densité d'au moins 0,6 kg/L.

11. Procédé selon la revendication 10, **caractérisé en ce que** la composition alimentaire sortie du moule est recouverte d'une couche de masse de confiserie ou bien d'une pâte de farine et d'eau, puis chauffée ou encore disposée sur une pâte cuite ou frittée.

12. Procédé selon l'une des revendications 10 à 11, **caractérisé en ce que** la protéine animale est une poudre de viande, une poudre de blanc d'oeuf et/ou une poudre d'hydrolysat de blanc d'oeuf avec une taille de particules dans la fourchette de 3-88 µm pour 70-90% en poids,
que l'isolat de protéine végétale a une taille de particules dans la fourchette de 2,5-70 µm pour 70-90%,
que la protéine de petit lait a une taille de particules dans la fourchette de 1-250 µm pour 70-90% en poids, que l'hydrolysat de protéine de petit lait a une taille de particules dans la fourchette de 5-283 µm pour 70-90% en poids,
que le premier hydrolysat de protéine animale a une taille de particules dans la fourchette de 31-250 µm pour 70-90% en poids,
que le second hydrolysat de protéine animale a une taille de particules dans la fourchette de 60-450 µm pour 70-90% en poids et la caséine et/ou le caséinat a une taille de particules dans la fourchette de 40-230 µm pour 70-90% en poids.

13. Procédé selon l'une des revendications 10 à 12, **caractérisé en ce qu'**avant de mélanger l'huile animale ou végétale et l'eau avec le mélange pulvérulent on mélange des composants solubles dans la graisse, au moins d'un arôme, avec l'huile animale ou végétale et les composants solubles dans la graisse dudit au moins un arôme sont mélangés avec l'eau.

14. Procédé selon l'une des revendications 10 à 13, **caractérisé en ce que** le premier hydrolysat de protéine animale contient 32 à 52% en poids d'une fraction > 100 kDa, 13 à 33% en poids d'une fraction de 100 à 30 kDa, 5 à 10% en poids d'une fraction de 20 à 30 kDa, et 9 à 10% d'une fraction pondérale de 0,6 à 20 kDa de même que des acides aminés monomères et dimères à hauteur de 3 à 20% en poids et le second hydrolysat de protéine animale contient 2 à 8% en poids d'une fraction avec > 10 kDa, 35 à 55% en poids d'une fraction de 10 à 5 kDa, 30 à 50% en poids d'une fraction de 5 à 3 kDa, 5 à 11% en poids d'une fraction de 3 à 0,6 kDa et 0 à 4% en poids d'acides aminés monomères et dimères.
